# EUROPEAN PATENT APPLICATION

(11) **EP 4 660 933 A2**
(43) Date of publication of application: **10.12.2025**
(21) Application number: 25175899.1
(22) Date of filing: 13.05.2025
(51) Int. Cl.: G06T 3/4038, G06T 5/80, G01C 11/00

(54) **GROUND CONTROL POINT HEIGHT ADJUSTMENT FOR IMPROVED ORTHO ACCURACY**

(30) Priority: 07.06.2024 US 202418737594
(71) Applicant: Maxar Intelligence Inc., Westminster, Colorado 80234 (US)
(72) Inventor: SWANSON, Nathan, Westminster, CO 80234 (US); SCHICKLER, Wolfgang, Westminster, CO 80234 (US); BLEILER, Laurence, Westminster, CO 80234 (US); HARTUNG, Steven, Westminster, CO 80234 (US)
(74) Representative: ARC-IP

(57) **Abstract**

When generating ortho rectified imagery or products, DEM height error can result in distortions and ortho shift. Using satellite images taken from an off-nadir angle and adjusting them to be from an ortho perspective in particular creates building lean effects and other unwanted artifacts. By accounting for a DEM error, which is to say a difference in DEM height and GCP height, satellite images can be used to make images with improved ortho accuracy.

## Description

### TECHNICAL FIELD

Example embodiments described herein relate generally to the field of satellite imaging. More particularly, the disclosure relates to generation or corrections to satellite images using digital elevation model corrections to ground control points to improve ortho rectification.

### BACKGROUND

To be useful in most contexts, an image obtained by a satellite must be mapped from image space to ground coordinates. If a satellite image shows features that are offset from the position where they are expected to be, there are several possible reasons. First, the pointing direction or off-nadir angle of the satellite could be different from what is expected, as described in the copending application entitled "Improvement of satellite pointing accuracy using Mobile Mapping Systems trajectories," having attorney reference number 18977.0026US01, the contents of which are incorporated herein by reference in their entirety for all that they teach. Second, the features that are detected in the image themselves could have moved, such that the ground coordinates of the object that is imaged is no longer in the same position where it was previously relative to some coordinate system (e.g., latitude, longitude, and altitude) or to nearby objects, as described in the copending application entitled "Plate Motion Correction in Satellite Bundle Block Adjustment," having attorney reference number 18977.0037US01, the contents of which are incorporated by reference in their entirety for all they teach.

Ortho images (i.e., images from a perspective of a viewer directly above the ground) are often constructed by processing one or more images from satellites that are not actually directly above the target image area, but instead are taken from some off-nadir angle away from the true ortho position. These images can be processed to form the ortho image using imaging software and using the known positions of known positions, referred to as Ground Control Points (GCPs). Uncertainty or error in the position of GCPs creates corresponding uncertainty or error in the ortho image after processing.

Satellite images, and in particular ortho images created therefrom, can be used in mapping and geolocation. Increasingly, users of such mapping systems expect high resolution and precision of the locations of the features identified within satellite images. In view of changes in the position of those features, it can be difficult to ascertain which changes in perceived position are due to pointing direction error, movement of the features themselves, and errors in the known positions of the GCPs used to form ortho images.

To increase precision and reduce these uncertainties, bundle block adjustments are used in some models. Bundle block adjustments involve the adjustment of multiple overlapping satellite images to create a seamless mosaic or accurate representation of a larger area. Bundle block adjustments are a technique used to correct satellite images in the presence of the challenges described above. Bundle block adjustments involve the use of GCPs having known coordinates to accurately align and rectify the images, compensating for distortions and aligning sets of images with a consistent coordinate system. This allows for the creation of accurate and georeferenced satellite imagery, facilitating precise analysis, mapping, and monitoring of the imaged region.

To correct for errors in ortho views that can be introduced by using bundle block adjustments, a combination of methods may be employed. One approach could involve the use of ground control points (GCPs) or control networks, which are accurately surveyed points on the Earth's surface with known coordinates. These GCPs can serve as reference points for aligning and adjusting the satellite images. By measuring the shifts and displacements of GCPs over time, it is possible to estimate and correct for plate tectonic movements.

A technique for creating a ground control network is disclosed in Dolloff, J., and M. Iiyama (2007), "Fusion of Image Block Adjustments for the Generation of a Ground Control Network," Proceedings from the Information Fusion, 2007 10th International Conference, Jul. 9-12, 2007 and U.S. Pat. No. 8,260,085 (collectively, "Dolloff"), the entire contents of each of which are incorporated herein by reference. This technique includes creating a ground control network of multiple ground control points (GCPs) from overlapping images generated from aerial and space-borne sensors and measurements of ground points in those images. Bundle block adjustments are described, for example, in U.S. Patent No. 9,251,419, the contents of which are incorporated by reference in their entirety and for everything that they teach.

Bundle block adjustments can be used to provide a rough adjustment that removes most of the uncertainty related to what effect tectonic plate movement has on the location of features within one or more satellite images. Bundle Block Adjustment can be performed according to those described in U.S. Patent Nos. 11,532,070 and 11,676,256, the contents of which are incorporated herein by reference in their entirety.

### SUMMARY

The example embodiments described herein meet the above-identified needs by providing methods, systems and computer program products for improving ortho imaging or measuring accuracy using measured lean at GCPs.

Embodiments described herein relate to a method for improving the ortho accuracy of ortho-rectified images. The method involves obtaining ground control point (GCP) data, including longitude, latitude, and altitude. An image containing the GCP is received, which is taken at an off-nadir angle. A Digital Elevation Model (DEM) error is determined for the region encompassing the GCP, by calculating the difference between the GCP's altitude and the DEM height. This DEM error is then used to calculate an ortho shift, which is equal to the DEM error multiplied by the tangent of the off-nadir angle. The image is subsequently amended based on the determined ortho shift, resulting in improved ortho accuracy.

In some embodiments, multiple images containing the GCP are received, each taken at a corresponding off-nadir angle. The ortho shift is calculated for each image, and all images are amended based on their respective ortho shifts. These amended images are then combined to further enhance the ortho accuracy. Additionally, a bundle block adjustment can be performed on the plurality of images to optimize their alignment and improve the overall accuracy.

Errors in the DEM data can be identified by comparing the DEM data with multiple GCPs. The identified errors are used to adjust the pointing accuracy of the satellite image, which can involve modifying pointing angles, azimuth, or elevation based on the DEM errors. The adjusted pointing accuracy is applied to the satellite image by adjusting position or orientation parameters used in satellite imaging software. By reprojecting the corrected satellite image after applying the determined ortho shift, a corrected ortho-rectified product, such as orthorectified satellite imagery or mosaics, can be generated.

Furthermore, the patent also presents a method for determining the accuracy of satellite imagery by measuring building lean. The method involves obtaining GCP data, including longitude, latitude, and altitude, and receiving an image containing the GCP taken at an off-nadir angle. Building lean in the image is measured based on GCP elevation. The measured building lean is then compared to an expected building lean derived from a reference dataset or known ground truth information, which allows for the determination of the image's accuracy. The accuracy determination can be enhanced by incorporating a DEM error for the region containing the GCP into the analysis or by performing a statistical analysis of building lean measurements across multiple GCPs. This accuracy determination provides valuable insights into the quality and reliability of the ortho-rectified image.

The following disclosure provides more detail regarding these and other methods and systems for improving ortho accuracy in ortho-rectified images by accounting for DEM errors and ortho shifts. It also introduces techniques for evaluating the accuracy of satellite imagery, particularly in relation to building lean artifacts. These advancements have the potential to enhance the precision and reliability of satellite imagery systems, benefiting a wide range of applications such as urban planning, infrastructure management, and environmental monitoring.

The details of one or more techniques are set forth in the accompanying drawings and the description below. Other features, objects, and advantages of these techniques is apparent from the description, drawings, and claims.

### BRIEF DESCRIPTION OF THE DRAWINGS

The features and advantages of the example embodiments of the invention presented herein will become more apparent from the detailed description set forth below when taken in conjunction with the following drawings.
FIG. 1 is a simplified schematic of a satellite imaging system.
FIG. 2 shows a series of satellite images that are aligned or overlapping with one another and can be stitched or mosaiced together to form a map.
FIG. 3 is a simplified schematic of a satellite imaging system, depicting an ortho shift.
FIG. 4 shows the simplified schematic of the satellite imaging system of FIG. 3, including correction to the ortho shift.
FIG. 5 is a flowchart of a method for correction of the ortho shift as shown in FIGS. 3 and 4.
FIG. 6 depicts an example block diagram of a virtual or physical operating environment.

Before one or more examples of the present teachings are described in detail, one skilled in the art will appreciate that the present teachings are not limited in their application to the details of construction, the arrangements of components, and the arrangement of steps set forth in the following detailed description or illustrated in the drawings. Also, it is to be understood that the terminology used herein is for the purpose of description and should not be regarded as limiting.

### DETAILED DESCRIPTION

The example embodiments of the invention presented herein are directed to methods, systems and computer program products for automated vectorization techniques for extracting vectors from imagery, which are now described herein in terms of an example aerial or satellite imagery of features such as buildings and roads. This description is not intended to limit the application of the example embodiments presented herein. In fact, after reading the following description, it will be apparent to one skilled in the relevant art(s) how to implement the following example embodiments in alternative embodiments (e.g., involving any form of imagery and/or imagery of features other than buildings and roads).

Unless otherwise defined, all terms (including technical and scientific terms) used herein have the same meaning as commonly understood by one of ordinary skill in the art of this disclosure. It will be further understood that terms, such as those defined in commonly used dictionaries, should be interpreted as having a meaning that is consistent with their meaning in the context of the specification and should not be interpreted in an idealized or overly formal sense unless expressly so defined herein. Well known functions or constructions may not be described in detail for brevity or clarity.

Illustrative examples of the disclosure are described below. In the interest of clarity, not all features of an actual implementation are described in this specification. It will of course be appreciated that in the development of any such actual example, numerous implementation-specific decisions must be made to achieve the developers' specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

The example embodiments of the invention presented herein are directed to methods, systems and computer program products for correlating satellite images to ground coordinates.

To generate a map of a large area, satellite images are combined through a process known as image mosaicking. Satellite images that cover parts of the desired area are arranged with overlap between them. These images are then georeferenced by assigning geographic coordinates to specific points within each image using Ground Control Points (GCPs) or matching features to a reference map or digital elevation model.

Once the images are georeferenced, they can be aligned. This alignment ensures that the images are spatially registered and accurately represent the area. Common features or GCPs in adjacent or overlapping images are matched, and geometric transformations are applied to align them correctly.

To create a seamless transition between overlapping areas, the aligned images can optionally be blended together. Techniques like feathering or gradient blending can be used to minimize visible seams and provide a smooth merge. In some types of images, color and contrast adjustments may also be applied to ensure visual consistency across the mosaic.

After aligning and optionally blending the images, they are composited or stitched together to form a single large mosaic representing the map of the entire area of interest. This final image mosaic combines the information from multiple satellite images to provide a comprehensive view of the area. Additional processing steps, such as noise reduction, image enhancement, or feature extraction, can also optionally be applied to further refine the map based on specific requirements or applications.

The resulting image mosaic represents a map of the large area, synthesized from multiple satellite images. This map can be utilized for various purposes, including land management, environmental monitoring, urban planning, or any other application that requires a comprehensive understanding of the area's geographic information.

As described in the Background, BBAs are an established mechanism for combining satellite images taken over overlapping regions, at different timepoints, from different off-nadir angles, and in different conditions. However, in some instances a difference in the actual elevation at an imaged location (referred to herein as DEM height) is different from the elevation that is associated with features on the ground that are used as control points (i.e., Ground Control Points or GCPs). This difference is referred to as DEM Error.

GCPs have been used in many satellite imaging systems among government and commercial entities. To such entities, it can be useful to piece together thousands of separate images into an orthomosaic image. Unfortunately, because it is not a routine matter to align and orient separate images relative to each other to produce this orthomosaic, misalignment errors are common. Misalignment errors can result in a straight road or edge of a building appearing in the orthomosaic as a road or building edge with a inflection point at the seam between images or in which the road segments in the two different images on either side of the seam do not intersect.

When satellite images are transformed from image space to orthographic images, an artifact known as "building lean" may appear for objects located at an elevation above the Digital Elevation Model (DEM). This artifact occurs due to factors such as the off-nadir angle of the satellite during image capture, the height of the object, and the proximity of a Ground Control Point (GCP) to the object. The result is that the orthographic image includes a portion of the object's side that would not be visible in a true orthographic image. While this disclosure refers to it as "building lean," it is important to note that this effect can occur for any structure that deviates from the elevation represented in the DEM.

In order to produce a quality orthomosaic image, a ground control network of a plurality of GCPs can be used. When one or more GCPs can be found in adjacent images, the GCPs can be used to orient the adjacent images so that they are properly aligned. When this is done satisfactorily, it will not be readily apparent that the combined image is a combination of more than one image.

Illustrative examples of the disclosure are described below. In the interest of clarity, not all features of an actual implementation are described in this specification. It will of course be appreciated that in the development of any such actual example, numerous implementation-specific decisions must be made to achieve the developers' specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

Unless otherwise defined, all terms (including technical and scientific terms) used herein have the same meaning as commonly understood by one of ordinary skill in the art of this disclosure. It will be further understood that terms, such as those defined in commonly used dictionaries, should be interpreted as having a meaning that is consistent with their meaning in the context of the specification and should not be interpreted in an idealized or overly formal sense unless expressly so defined herein. Well known functions or constructions may not be described in detail for brevity or clarity.

The following section defines some of the terminology used throughout this disclosure. The definitions provided below are intended to be consistent with common usage in the field of satellite imaging, and are for clarification only. However, to the extent that these definitions conflict with common usage, the definitions below are intended to control.

"Image" or "satellite image" is used throughout this disclosure to refer to an image acquired from an aerial or satellite-mounted camera. Although "satellite image" may be used as a shorthand to describe such images, there is no practical difference between an image acquired from a balloon, a non-orbiting spacecraft, a satellite, an airplane, or any other non-terrestrial camera. Increasingly, aerial images are obtained from small unmanned aerial vehicles. Imagery obtained by any and all of these types of cameras are intended to be within the scope of "image" or "satellite image" as used throughout this disclosure.

The image places features at "image coordinates." The image coordinates for features captured in an image can be based upon an algorithm or model that corrects for the position and orientation of the camera.

"Ground coordinates," in contrast, are generated based upon the mobile mapping. Ground coordinates, like image coordinates, can have a three-dimensional position. In an ideal, perfectly calibrated system, the image coordinates can be used to compute corresponding ground coordinates. However, due to various imaging errors or unmodeled tectonic plate motion, computed ground coordinates may be offset from their true location. However, due to various imaging errors or changes in tectonic plate position as described above, the image coordinates may be offset from the ground coordinates.

In the context of satellite imaging or remote sensing, an ortho perspective refers to an orthorectified perspective. Orthorectification is a process used to remove the effects of terrain relief (such as hills and valleys) and sensor perspective (such as the tilt and position of the imaging sensor) from an image, resulting in a geometrically corrected image where features are represented in their true positions on the Earth's surface.

Ortho perspective is essentially a view of the Earth's surface from directly overhead, as if looking straight down from above, without any distortions caused by terrain or sensor perspective. This perspective is commonly used in mapping, geographic information systems (GIS), land use planning, and other applications where accurate spatial information is crucial.

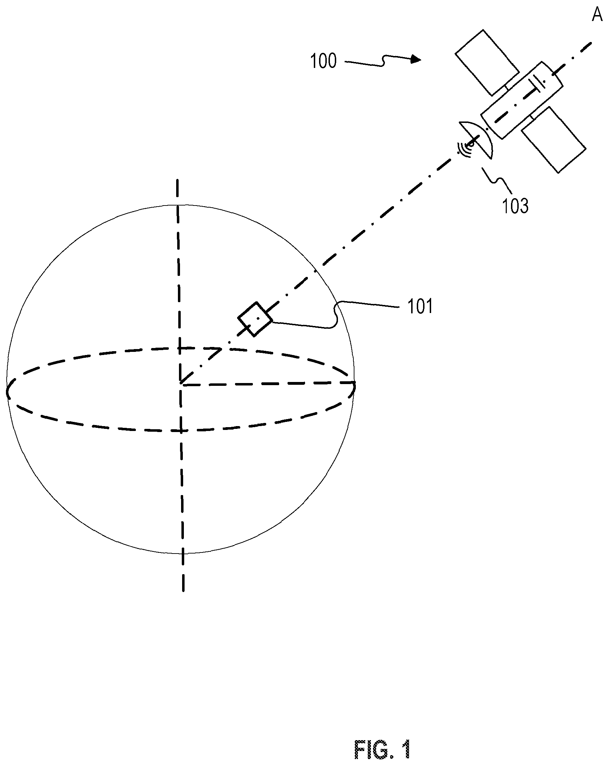

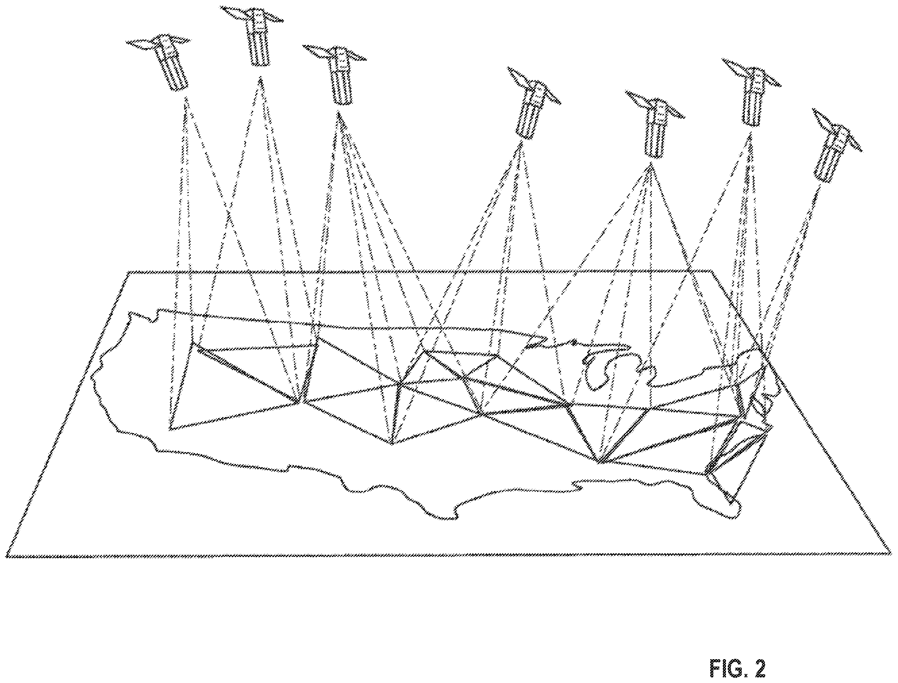

FIGS. 1 and 2 are a representation of a system for satellite imaging. As shown in FIG. 1, a satellite 100 is pointed along an axis A towards a target 101 to generate an image thereof by a camera 103.

Satellite 100 can be any of a variety of remote platforms, such as a space station or communications or imaging satellite as shown, or even a platform that is not fully in space such as a balloon, or an airplane, drone, glider, or the like. Depending upon the elevation and speed relative to the ground (e.g., whether the satellite 100 is in low earth orbit, geosynchronous orbit, in the atmosphere, etc.).

Target 101 is a location that the satellite 100 is imaging. In FIG. 1, target 101 is a location on a sphere, representing a satellite image of Earth. However, the methods and systems disclosed herein may be usable in other contexts. For example, other planets, moons, or manmade structures currently in existence or that may be constructed in the future may have features thereon that are usable according to methods described herein.

An image of the target 101 can include a variety of features as shown in FIG. 2, including natural features like rivers, streams, trees, and mountains that are present at target 101. Additionally, target 101 image includes any manmade features such as roads, rails, and buildings at the target 101.

Camera 103 can be any of a variety of commercial cameras that can be mounted to a satellite 100. Camera 103 is carefully aligned along axis A and pointed towards a desired target 101 so that target image 102 does not depict an area that is offset from the desired target 101. Camera 103 can be a color camera, or a black-and-white camera that measures brightness of visible light as a whole. Generally the output of camera 103 will be an image file or a set of image files that can be stitched together to form a larger image or mapping of an area of interest.

FIG. 2 is a simplified illustration of an imaging satellite taken from US 9,875,404, the contents of which are incorporated herein by reference in their entirety. As shown in FIG. 2, images are taken at various different times in various different positions above a land mass (in this case North America, where only the continental United States is illustrated). In each position, the satellite is able to obtain ground images. The WorldView satellite instruments are pushbroom electro optical (EO) sensors that have high pointing accuracies of 3-4 meters on the ground. Panchromatic band ground sample distances (available in commercial imagery) are as Small as 0.15-0.3 m for the WorldView sensors.

In this overly-simplified example, each vertex represents a Ground Control Point (GCP) in the MIN, and each edge represents the cross-covariance between errors in the two GCPs that it connects. Each GCP will have been observed in two or more images (which are not shown in this diagram), and nearby Ground Control Points are likely to have been observed at least once in the same image. This common origin produces the correlation in coordinate errors that is represented by the cross-covariance matrix. Errors in GCPs that are farther apart are still correlated, but more weakly. The network of GCPs, tied together by their error covariance matrices, is known as a Metric Information Network (MIN).

Initially, at least two images are obtained of an area on the ground, although any larger number of images could be used. They may be a pair of stereo images, but that is not a requirement. In the case of the pair, they may be taken from different points in space (e.g., with a 40-60 degree collection angle between them). For example, an image can be taken of a ground location as the satellite approaches the location and then again after the satellite passes the location. It should be noted that it is known to reasonable accuracy the locations on the ground where the image was taken and the location above the ground where the satellite was when the image was taken, via information from the satellite's GPS receiver and IMU. These locations can be expressed in earth centered, earth-fixed (ECF) coordinates of x, y, and Z, where the point (0,0,0) is located at the center of mass of the Earth, the x-axis runs through the Greenwich Meridian at the Equator, the y-axis is orthogonal thereto and also runs through the Equator, and the Z-axis runs through the North Pole, as depicted generally in FIG. 1.

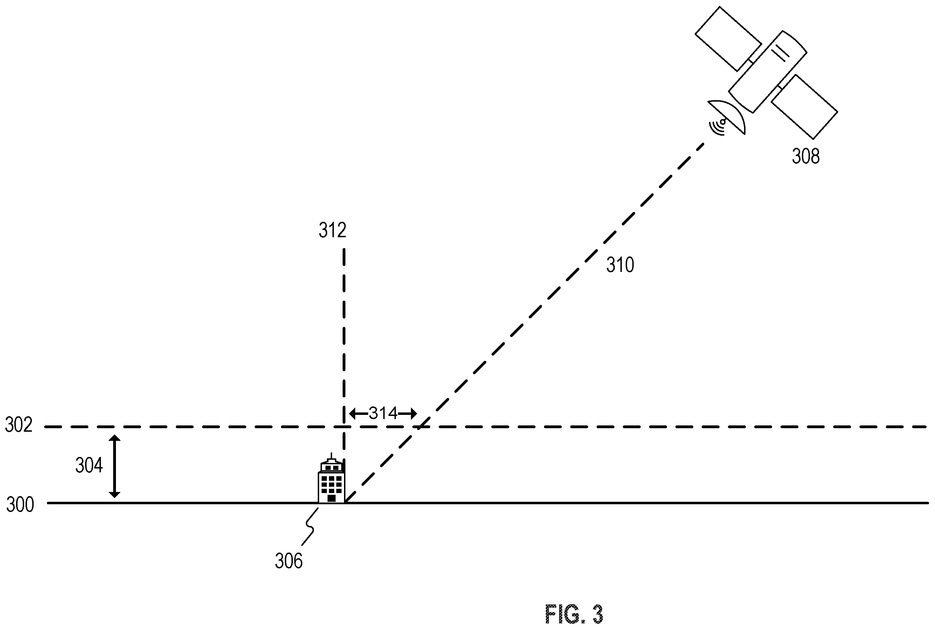

FIG. 3 is a simplified schematic of a satellite imaging arrangement that includes an ortho shift. As shown in FIG. 3, ground elevation 300 is different from the DEM height 302 by a DEM error 304. GCP 306 (in this case, the edge of a building) is imaged by satellite 308, along imaging axis 310. The satellite 308 is ideally used to generate an ortho image (i.e., an image as though it were taken from the perspective of ortho axis 312). However, due to the DEM error 304, an image from satellite 308 conventionally be interpreted to conclude that the GCP 306 is at the DEM height 302 and shifted by ortho shift 314.

In the context of satellite imaging, ortho shift 314 refers to the displacement or error in the positional alignment of the satellite imagery with respect to a reference map or ground truth. It represents the difference between the actual location of features captured in the satellite image and their expected or correct location on the Earth's surface.

Ortho shift can occur due to various factors, such as inaccuracies in the satellite sensor's pointing accuracy, errors in the satellite's position estimation, or deficiencies in the DEM used for orthorectification as shown in FIG. 3. These errors can result in misalignment between the captured satellite image and the reference map.

Correcting ortho shift can be used to more accurately georeferenced the imagery taken from satellite 308 and produce orthorectified products. By accounting for ortho shift, the satellite imagery can be adjusted and aligned with the reference map, ensuring accurate spatial representation and enabling reliable analysis, measurements, and mapping applications.

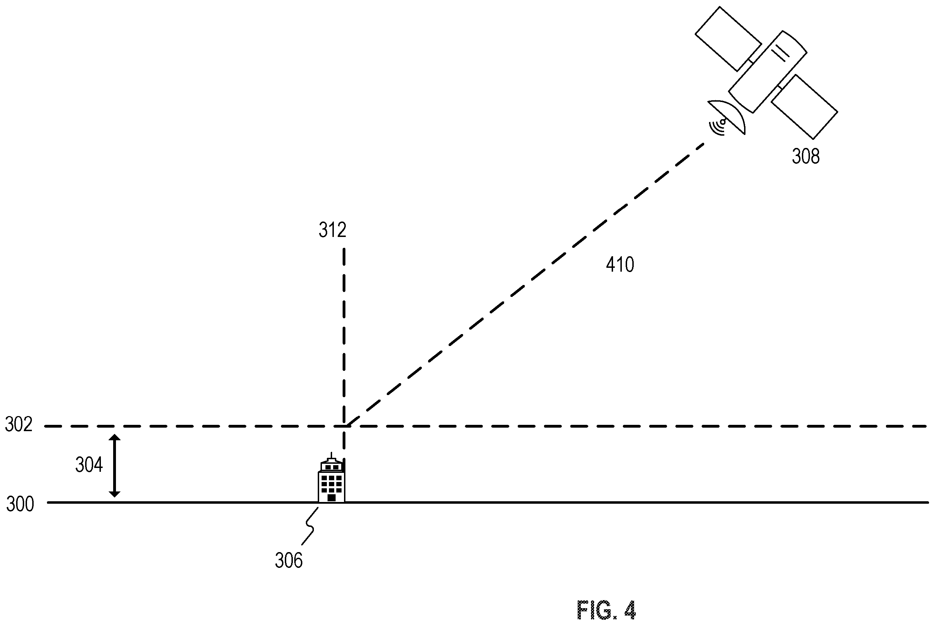

FIG. 4 shows a height-adjusted GCP. Like reference numbers are used to refer to like parts from FIG. 3. In contrast to FIG. 3, however, the imaged GCP 306 is height adjusted by the DEM error 304, such that there is no ortho shift (314, FIG. 3).

The height adjustment is done by applying translation transformations to the GCP in processing the image taken by satellite 308, shifting it vertically by the DEM error 304.

Ortho shifts are important for ensuring that different layers of geographic information, such as satellite imagery, maps, and other spatial data, are properly aligned and can be accurately analyzed and interpreted together. This alignment facilitates tasks such as feature extraction, change detection, and spatial analysis in geographic information systems (GIS) and other spatial analysis software.

DEM error 304 can be determined by replacing the elevation of a given GCP with a height of a DEM model for the same area. In other words, the difference between the DEM height and the GCP height can be used as the DEM error 304. The height-adjusted GCP is used to form the remainder of the ortho product, including all of the imaged region in addition to just the GCP, with improved accuracy that reduces or eliminates ortho shift.

Example improvements account for and correct image data used in an ortho perspective to account for building-lean effect (i.e., the appearance of a side of a building when viewed from the ortho perspective). Across the entirety of the image, a theoretical improvement - or reduction in ortho shift - is given by d tan(a) where d is the DEM error at the GCP and a is the off-nadir angle of the satellite image.

The improvement or reduction in ortho shift is made even better by combinations of multiple satellite images, each corrected in the same fashion based on their imaging angle. As more images are taken, the ortho view can be made ever more accurate.

In a corollary, ground control points (GCPs) can be used as diagnostic points to measure the accuracy of the imagery rather than using them as a means to improve that accuracy. By considering GCPs as diagnostic points, the technique enables a more precise accuracy measurement by correctly accounting for ortho shift. This approach ensures that any distortions or artifacts caused by ortho-rectification, such as building lean, are not considered as part of the measurement of accuracy.

Specifically, in the case of building lean, it is commonly recognized as an artifact of ortho-rectification, and therefore, it should not be factored into the canonical accuracy measurement standards. The accuracy measurements are assumed to represent the true ground conditions. Consequently, GCPs located on top of tall buildings that experience building lean would deviate from this measurement standard when ortho-rectification is applied. By excluding such artifacts from the accuracy measurement and focusing solely on the GCPs as diagnostic points, a more accurate and reliable assessment of the imagery's precision can be achieved.

Using GCPs as diagnostic points allows for a more comprehensive evaluation of the ortho accuracy. By measuring the ortho shift caused by DEM errors and other factors, the impact of ortho-rectification artifacts can be isolated and quantified. This approach not only provides a clearer understanding of the accuracy of the imagery but also allows for better identification and characterization of any potential distortions. By utilizing GCPs in this manner, the diagnostic process becomes more robust and reliable, enhancing the overall evaluation of the ortho-rectified images.

Moreover, this corollary presents an opportunity to refine the accuracy measurement standards for satellite imagery systems. By acknowledging and accounting for ortho shift and the artifacts associated with ortho-rectification, a more realistic and accurate representation of the ground conditions can be achieved. This recognition of the limitations and potential biases introduced by the ortho-rectification process allows for a more nuanced interpretation of the accuracy measurements. By incorporating GCPs as diagnostic points, the evaluation of ortho accuracy can be tailored to account for these factors, providing a more comprehensive and reliable assessment of the imagery's precision. This advancement can lead to improved understanding and interpretation of satellite imagery, benefiting various applications such as urban planning, infrastructure development, and environmental monitoring.

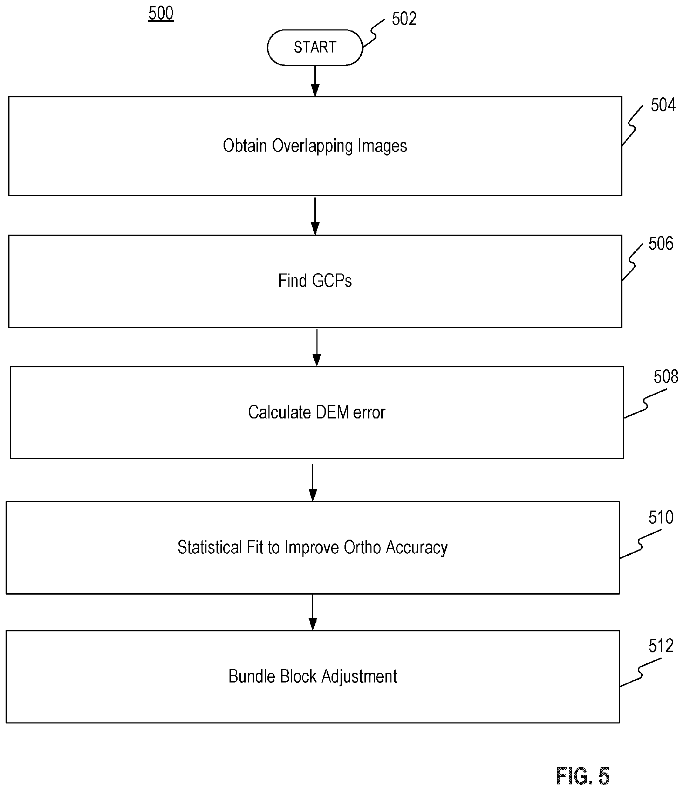

FIG. 5 is a method 500 for improving ortho accuracy according to an embodiment. Method 500 starts at 502.

Overlapping images are obtained at 504. These overlapping images will contain at least one GCP in common with one another, and may be from different off-nadir angles and positions of either the same or different satellites.

At 506, GCPs are identified. In a given satellite image, there can be any number of GCPs. These are locations as described above that are easily identifiable in a satellite image and having known coordinates.

At 508, DEM error is calculated. DEM error is the difference between the DEM height and the GCP height. In many cases, DEM height is obtained from a database, as is GCP height.

At 510, a statistical fit is performed to improve ortho accuracy. By applying a DEM error correction, the ortho accuracy of each part of the imaged region can be improved. The statistical fit can also include performing a DEM error correction on each of a set of images (e.g., all of the images obtained at 504) and combining them to reduce error still further.

At 512, a bundle block adjustment is performed, stitching together the multiple images from 504, including those that only partially overlap, to form a single mosaicked product.

In embodiments, some of these features that can be performed using a computer can use any of a variety of programming languages (e.g., a C-family programming language, PYTHON, JAVA, RUST, HASKELL, other languages, or combinations thereof), libraries (e.g., libraries that provide functions for obtaining, processing, and presenting data), compilers, and interpreters to implement aspects described herein. Example libraries include NLTK (Natural Language Toolkit) by Team NLTK (providing natural language functionality), PYTORCH by META (providing machine learning functionality), NUMPY by the NUMPY Developers (providing mathematical functions), and BOOST by the Boost Community (providing various data structures and functions) among others. Operating systems (e.g., WINDOWS, LINUX, MACOS, IOS, and ANDROID) may provide their own libraries or application programming interfaces useful for implementing aspects described herein, including user interfaces and interacting with hardware or software components. Web applications can also be used, such as those implemented using JAVASCRIPT or another language. A person of skill in the art, with the benefit of the disclosure herein, can use programming tools to assist in the creation of software or hardware to achieve techniques described herein. Such tools can include intelligent code completion tools (e.g., INTELLISENSE) and artificial intelligence tools (e.g., GITHUB COPILOT).

One or more of the elements listed above, or some combination thereof, can benefit from or be implemented using a machine learning framework. A machine learning framework is a collection of software and data that implements artificial intelligence trained to provide output based on input. Examples of artificial intelligence that can be implemented in a trainable way include neural networks (including recurrent neural networks), language models (including so-called "large language models"), generative models, natural language processing models, adversarial networks, decision trees, Markov models, support vector machines, genetic algorithms, others, or combinations thereof. Machine learning frameworks or components thereof are often built or refined from existing frameworks, such as TENSORFLOW by GOOGLE, INC. or PYTORCH by the PYTORCH community. The machine learning framework can include one or more models that are the structured representation of learning and an interface that supports use of the model.

The model can take any of a variety of forms. In many examples, the model includes representations of nodes (e.g., neural network nodes, decision tree nodes, Markov model nodes, other nodes, or combinations thereof) and connections between nodes (e.g., weighted or unweighted unidirectional or bidirectional connections). In certain implementations, the model can include a representation of memory (e.g., providing long short-term memory functionality). Where the set includes more than one model, the models can be linked, cooperate, or compete to provide output.

The interface can include software procedures (e.g., defined in a library) that facilitate the use of the model, such as by providing a way to interact with the model (e.g., receive and prepare input, processing the input with the model and provide output). The interface can define a vector embedding technique for creating a representation of data usable as input into the model. The software can further provide the ability to create, customize, fine tune, and train the model.

In an example implementation, interface can provide a training method that includes initializing a model, obtaining training data, providing a portion of the training data to the model to produce an actual output, comparing the expected output with the actual output, updating the model based on the result of the comparison (e.g., updating weights of the model, such as using backpropagation), continuing providing training data and updating the model until a stopping criterion has been reached, and deploying the trained model for use in production.

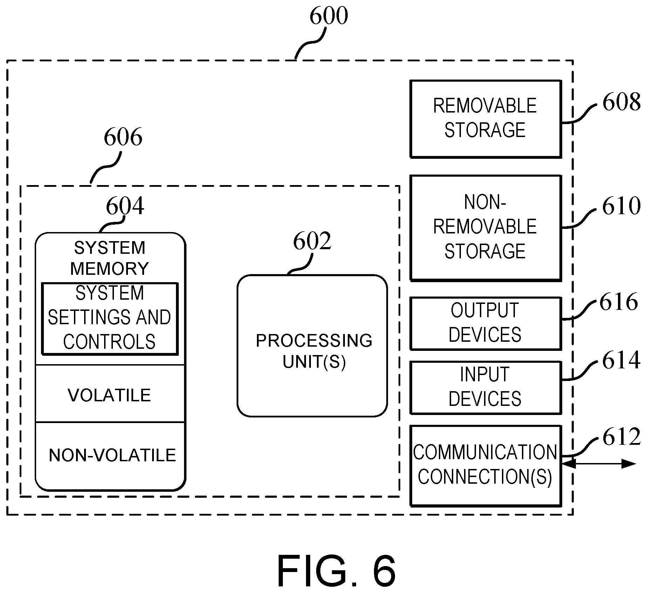

FIG. 6 depicts one example of a suitable operating environment 600 in which one or more of the present examples can be implemented. This is only one example of a suitable operating environment and is not intended to suggest any limitation as to the scope of use or functionality. Other well-known computing systems, environments, and/or configurations that can be suitable for use include, but are not limited to, personal computers, server computers, hand-held or laptop devices, multiprocessor systems, microprocessor-based systems, programmable consumer electronics such as smart phones, network PCs, minicomputers, mainframe computers, tablets, distributed computing environments that include any of the above systems or devices, and the like.

In its most basic configuration, operating environment 600 typically includes at least one processing unit 602 and memory 604. Depending on the exact configuration and type of computing device, memory 604 (storing, among other things, instructions to control the eject the samples, move the stage, or perform other methods disclosed herein) can be volatile (such as RAM), non-volatile (such as ROM, flash memory, etc.), or some combination of the two. This most basic configuration is illustrated in FIG. 6 by dashed line 606. Further, operating environment 600 can also include storage devices (removable, 608, and/or non-removable, 610) including, but not limited to, magnetic or optical disks or tape. Similarly, environment 600 can also have input device(s) 614 such as touch screens, keyboard, mouse, pen, voice input, etc., and/or output device(s) 616 such as a display, speakers, printer, etc. Also included in the environment can be one or more communication connections 612, such as LAN, WAN, point to point, Bluetooth, RF, etc.

Operating environment 600 typically includes at least some form of computer readable media. Computer readable media can be any available media that can be accessed by processing unit 602 or other devices having the operating environment. By way of example, and not limitation, computer readable media can include computer storage media and communication media. Computer storage media includes volatile and nonvolatile, removable and non-removable media implemented in any method or technology for storage of information such as computer readable instructions, data structures, program modules or other data. Computer storage media includes, RAM, ROM, EEPROM, flash memory or other memory technology, CD-ROM, digital versatile disks (DVD) or other optical storage, magnetic cassettes, magnetic tape, magnetic disk storage or other magnetic storage devices, solid state storage, or any other tangible medium which can be used to store the desired information. Communication media embodies computer readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer readable media. A computer-readable device is a hardware device incorporating computer storage media.

The operating environment 600 can be a single computer operating in a networked environment using logical connections to one or more remote computers. The remote computer can be a personal computer, a server, a router, a network PC, a peer device or other common network node, and typically includes many or all of the elements described above as well as others not so mentioned. The logical connections can include any method supported by available communications media. Such networking environments are commonplace in offices, enterprise-wide computer networks, intranets and the Internet.

In some examples, the components described herein include such modules or instructions executable by operating environment 600 that can be stored on computer storage medium and other tangible mediums and transmitted in communication media. Computer storage media includes volatile and non-volatile, removable and non- removable media implemented in any method or technology for storage of information such as computer readable instructions, data structures, program modules, or other data. Combinations of any of the above should also be included within the scope of readable media. In some examples, operating environment 600 is part of a network that stores data in remote storage media for use by the operating environment 600.

While particular uses of the technology have been illustrated and discussed above, the disclosed technology can be used with a variety of data structures and processes in accordance with many examples of the technology. The above discussion is not meant to suggest that the disclosed technology is only suitable for implementation with the data structures shown and described above. For example, while certain technologies described herein were primarily described in the context of queueing structures, technologies disclosed herein are applicable to data structures generally.

This disclosure described some aspects of the present technology with reference to the accompanying drawings, in which only some of the possible aspects were shown. Other aspects can, however, be embodied in many different forms and should not be construed as limited to the aspects set forth herein. Rather, these aspects were provided so that this disclosure was thorough and complete and fully conveyed the scope of the possible aspects to those skilled in the art.

As should be appreciated, the various aspects (e.g., operations, memory arrangements, etc.) described with respect to the figures herein are not intended to limit the technology to the particular aspects described. Accordingly, additional configurations can be used to practice the technology herein and/or some aspects described can be excluded without departing from the methods and systems disclosed herein.

Similarly, where operations of a process are disclosed, those operations are described for purposes of illustrating the present technology and are not intended to limit the disclosure to a particular sequence of operations. For example, the operations can be performed in differing order, two or more operations can be performed concurrently, additional operations can be performed, and disclosed operations can be excluded without departing from the present disclosure. Further, each operation can be accomplished via one or more sub-operations. The disclosed processes can be repeated.

Having described the preferred aspects and implementations of the present disclosure, modifications and equivalents of the disclosed concepts may readily occur to one skilled in the art. However, it is intended that such modifications and equivalents be included within the scope of the claims which are appended hereto.

## Claims

1. A method for improving an ortho accuracy in ortho-rectified images, the method comprising:
obtaining a longitude, a latitude, and an altitude corresponding to a ground control point (GCP);
receiving an image including the GCP, wherein the image is taken at an off-nadir angle;
obtaining a Digital Elevation Model (DEM) error including a region that includes the GCP;
calculating a DEM error equal to the difference between the altitude in the GCP and a DEM height of the GCP;
determining an ortho shift equal to the DEM error multiplied by the tangent of the off-nadir angle; and
amending the image based on the determined ortho shift.

2. The method of claim 1, further comprising receiving a plurality of images including the GCP, wherein each of the images of the plurality of images is taken at a corresponding off-nadir angle.

3. The method of claim 2, further comprising amending each of the images of the plurality of images based on the determined ortho shift, and combining the plurality of amended images to improve the ortho accuracy.

4. The method of claim 3, further comprising performing a bundle block adjustment to the plurality of images.

5. The method of any preceding claim, wherein the errors in the DEM data are identified through a comparison between the DEM data and multiple GCPs.

6. The method of any preceding claim, wherein the adjusting of the pointing accuracy comprises modifying the pointing angles, azimuth, or elevation of the satellite image based on the identified errors in the DEM data.

7. The method of any preceding claim, wherein the adjusted pointing accuracy is applied to the satellite image by adjusting a position parameter or an orientation parameter used as an input to a satellite imaging software package.

8. The method of any preceding claim, wherein the corrected satellite imagery is generated by reprojecting the satellite image after correcting by the determined ortho shift.

9. The method of any preceding claim, further comprising generating an ortho-rectified product that is at least one of orthorectified satellite imagery or mosaics.

10. A computer program product for correcting a satellite image by accounting for errors in Digital Elevation Models (DEM), comprising computer-readable instructions stored on a non-transitory computer-readable storage medium, which, when executed by a processor, cause the processor to perform the method steps of any of claims 1 - 9.

11. A method for determining an accuracy of satellite imagery, the method comprising:
obtaining a longitude, a latitude, and an altitude corresponding to a ground control point (GCP);
receiving an image including the GCP, wherein the image is taken at an off-nadir angle;
measuring a building lean in the image based as a function of GCP elevation;
comparing the building lean in the image as a function of GCP elevation against an expected building lean as a function of GCP elevation to determine an accuracy of the image.

12. The method of claim 11, further comprising obtaining a Digital Elevation Model (DEM) error for the region that includes the GCP, and incorporating the DEM error into the accuracy determination.

13. The method of claim 11 or 12, wherein the expected building lean as a function of GCP elevation is derived from a reference dataset or known ground truth information.

14. The method of any of claims 11 - 13, wherein the accuracy determination is based on a statistical analysis of the building lean measurements across multiple GCPs within the image.

15. The method of any of claims 11 - 14, wherein the accuracy determination is used to assess the quality and reliability of the ortho-rectified image.

16. A computer program product for evaluating the accuracy of satellite imagery by measuring building lean, comprising computer-readable instructions stored on a non-transitory computer-readable storage medium, which, when executed by a processor, cause the processor to perform the method steps of any of claims 11 - 15.
